# EUROPÄISCHE PATENTANMELDUNG

(11) **EP 3 702 951 A1**
(43) Veröffentlichungstag der Anmeldung: **02.09.2020**
(21) Anmeldenummer: 19160181.4
(22) Anmeldetag: 01.03.2019
(51) Int. Cl.: G06F 21/55, H04L 29/06

(54) **COMPUTERIMPLEMENTIERTES VERFAHREN UND BLOCKCHAIN-SYSTEM ZUR ERKENNUNG EINES ANGRIFFS AUF EIN COMPUTERSYSTEM BZW. COMPUTERNETZWERK**

(71) Anmelder: Siemens Aktiengesellschaft, 80333 München (DE)
(72) Erfinder: Sel, Tolga, 80809 München (DE)

(57) **Zusammenfassung**

Die Erfindung betrifft ein computerimplementiertes Verfahren zur Erkennung eines Angriffs auf ein Computersystem bzw. Computernetzwerk, mit den Schritten: Einsetzen eines Analysemittels für das Computersystem bzw. Computernetzwerk als Smart Contract in eine Blockchain mit einer Vielzahl von miteinander verketteten Blöcken; Festlegen von Parametern für das Analysemittel; Ausführen des Analysemittels basierend auf den Parametern; und Einfügen des Analyseergebnisses in die Blockchain. Zumindest ein Teil der Parameter entspricht dem Verhalten des Computersystems bzw. Computernetzwerks und weist eine Logdatei des Computersystems bzw. Computernetzwerks auf.

## Beschreibung

Die Erfindung betrifft ein computerimplementiertes Verfahren und ein Blockchain-System zur Erkennung eines Angriffs auf ein Computersystem bzw. Computernetzwerk.

Ein Angriffserkennungssystem bzw. Intrusion Detection System (IDS) ist ein System, das Computersysteme bzw. Computernetzwerke aktiv überwacht, um etwaige Angriffe zu erkennen. Grundsätzlich werden zur Angriffserkennung bei einem IDS die beiden nachfolgenden Techniken eingesetzt:
Signaturbasierte (engl. "signature-based") Angriffserkennungen arbeiten mit in einer Datenbank abgespeicherten Angriffsmustern ("Angriffssignaturen"), um ein aktives System zu überwachen. Angriffe werden erkannt, indem das IDS Angriffssignaturen aus seiner Datenbank mit dem aktuellen Systemverhalten vergleicht. Stimmt eine abgespeicherte Signatur mit dem aktuellen Systemverhalten überein, schließt dann das IDS daraus einen Angriff.

Ein Anomalie-basiertes IDS versucht Angriffe zu detektieren, indem es im Systemverhalten Veränderungen erkennt. Das bedeutet konkret, dass im ersten Schritt das IDS das normale Verhalten des Computersystems lernt/analysiert, oder, mit anderen Worten, dass eine vertrauenswürdige dritte Instanz das normale Verhalten des Computersystems lernt, um im zweiten Schritt das aktuelle Verhalten des Systems mit dem zuvor erlernten normalen Verhalten zu vergleichen. Weicht das aktuelle Verhalten von dem zuvor erlernten normalen Verhalten ab, kann dies anschließend als Anomalie angesehen werden, die unter Umständen ein Zeichen für einen Angriff auf ein Computersystem ist. Die Entscheidung, ob das System von seinem normalen Verhalten abgewichen ist, kann mit Hilfe von statistischen Methoden oder Algorithmen des maschinellen Lernens (engl. "Machine Learning") bewerkstelligt werden.

Ein Host-basiertes Intrusion Detection System (HIDS) ist ein IDS, das auf einem Computersystem installiert wird und Informationen über den Betriebszustand des Computersystems sammelt, um mit Hilfe dieser Informationen Angriffe zu erkennen. Ein Netzwerk-basiertes Intrusion Detection System (NIDS) versucht, durch Analyse des Netzwerkverkehrs Angriffe zu entdecken.

Um diese beiden Arten von IDS (also HIDS, NIDS) realisieren zu können, muss zunächst eine Logdatei bzw. müssen zunächst Lognachrichten des aktuellen Systemverhaltens, die das automatisch geführte Protokoll aller oder bestimmter Aktionen von Prozessen auf dem System enthält bzw. enthalten, erstellt werden. Lognachrichten dokumentieren das Systemverhalten, wie beispielsweise Systemaufrufe (engl. "system calls"), Datenzugriffe, Netzwerkpakete, Kommunikationsprotokolle, Nutzerlogins, fehlgeschlagene Aufrufe, aktive Netzwerkverbindungen, Input-Werte externer Sensoren und Aktoren usw. Diese Lognachrichten (bzw. diese Logdatei) müssen anschließend von einem IDS analysiert und bewertet werden. Das Resultat der Lognachrichtenanalyse zeigt, ob zu dem System ein Angreifer aktiv war/ist, oder nicht.

Angreifer, die die Kontrolle über das relevante Computersystem bzw. das entsprechende IDS erlangt haben, können jedoch die Analyse der Lognachrichten manipulieren. Mit anderen Worten, obwohl die Lognachrichten bereits Hinweise auf einen Angreifer beinhalten, zeigt das Ergebnis der Lognachrichtenanalyse, die durch das IDS vorgenommen wurde, immer einen normalen Betriebszustand des Systems, da der Angreifer bereits das IDS kontrolliert und dementsprechend dieses Ergebnis verfälscht hat.

Um dies zu vermeiden, kann bei einer zentralen und vertrauenswürdigen Instanz die Lognachrichtenanalyse durchgeführt werden, welche Instanz einen sogenannten "Remote Attestation Service" anbietet. Die auf einer sicheren Instanz vorgenommene Analyse der Lognachrichten wird in einem gesicherten Umfeld mit erhöhten Sicherheitsmaßnahmen betrieben.

Jedoch besteht bei einer solchen zentralen Instanz ein Problem darin, dass von dem gesamten Ökosystem die Instanz als zentraler Sicherheitsknoten angesehen wird, der zu einem sogenannten "Single Point of Failure" führen könnte. Hierunter versteht man einen Bestandteil eines technischen Systems, dessen Ausfall den Ausfall des gesamten Systems nach sich zieht.

Üblicherweise besteht die Möglichkeit, vergangene Analysen / Lognachrichten einer bestimmten Komponente zu einem späteren Zeitpunkt analysieren zu wollen. Dies kann der Fall sein, wenn eine Komponente einen Fehlerfall produziert und hier der jeweilige Betreiber die vergangenen Analyseläufe / Lognachrichten auf etwaige Auffälligkeiten untersuchen möchte. In diesem Fall muss das überwachte System nicht nur zur Laufzeit integer bzw. vollständig sein, sondern auch die Integrität früherer Analysen muss abgesichert werden. Dies führt zu einer komplexen und kostspieligen zentralen Analyseinstanz, bei der immer noch die Gefahr "Single Point of Failure" besteht.

Da eine zentrale Instanz üblicherweise für mehrere Kunden die Lognachrichtenanalyse durchführt, muss das System bei der zentralen Instanz durch Redundanzmechanismen eine sehr hohe verfügbare Betriebszeit (engl. "Uptime") gewährleisten. Auch das führt dazu, dass die zentrale Analyseinstanz komplex und kostspielig sein kann.

Die hohen Kosten der zentralen Instanz fallen auf der Betreiberseite an, welches unter Umständen durch wirtschaftliche Unattraktivität das entsprechende Geschäft zerstören könnte. Außerdem sind solche Systeme bei einer zentralen Instanz oftmals komplex, da mehrere Kunden parallel bedient werden müssen.

Daher liegt der Erfindung die Aufgabe zugrunde, ein computerimplementiertes Verfahren, ein System, ein Computerprogramm und ein computerlesbares Medium zur Erkennung eines Angriffs auf ein Computersystem bzw. Computernetzwerk zu schaffen, die in einer einfachen und wirtschaftlich attraktiven Weise das Sicherheitsniveau bezüglich der Erkennung eines Angriffs auf ein Computersystem bzw. Computernetzwerk erhöhen.

Diese Aufgabe wird erfindungsgemäß durch die in den unabhängigen Ansprüchen angegebenen Merkmale gelöst. Vorteilhafte Weiterbildungen ergeben sich aus den Unteransprüchen.

Die Technologie von Blockketten (engl. "Blockchains") bzw. "Distributed Ledgers" ist aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Unter einem "Smart Contract" kann im Zusammenhang mit der Erfindung beispielsweise ein ausführbarer Programmcode verstanden werden. Der Smart Contract ist vorzugsweise in einer Transaktion eines verteilten Datenbanksystems (z. B. einer Blockkette) gespeichert, beispielsweise in einem Datenblock des verteilten Datenbanksystems. Zwei einfache Beispiele für einen Smart Contract sind Folgende: Wenn die Summe x von der Adresse y eintrifft, führe z aus; und, wenn die Summe y > 2*x von der Adresse z eintrifft, sende 2*x an v.

Smart Contracts werden in der Regel durch Mining Nodes ausgeführt. Unter "Mining Nodes" werden Blockchainteilnehmer verstanden, die Smart Contracts ausführen und versuchen, das Ergebnis der Ausführung als einen neuen Block in der Blockchain abzuspeichern. Mining Nodes werden für das Ausführen von Smart Contracts belohnt und nur bezahlt, falls diese es schaffen, in der Blockchain einen neuen Block einzufügen. Um dies zu erreichen, müssen die Mining Nodes ein kryptographisches Rätsel lösen, welches in der Regel eine rechenintensive Aufgabe ist.

Gemäß einem ersten Aspekt betrifft die Erfindung ein computerimplementiertes Verfahren zur Erkennung eines Angriffs auf ein Computersystem bzw. Computernetzwerk, mit den Schritten: Einsetzen eines Analysemittels für das Computersystem bzw. Computernetzwerk als Smart Contract in eine Blockchain mit einer Vielzahl von miteinander verketteten Blöcken; Festlegen von Parametern für das Analysemittel, wobei zumindest ein Teil der Parameter dem Verhalten des Computersystems bzw. Computernetzwerks entspricht und insbesondere eine Logdatei des Computersystems bzw. Computernetzwerks aufweist; Ausführen des Analysemittels basierend auf den Parametern; und Einfügen des Analyseergebnisses in die Blockchain.

Erfindungsgemäß wird die bisher eingesetzte zentrale Analyseinstanz durch eine auf Blockchain basierte dezentrale Architektur ersetzt. Dadurch können Lognachrichten bzw. kann eine Logdatei (welche auch aus nur einer einzelnen Lognachricht bestehen kann), die z.B. von einem IDS und/oder dem entsprechenden Computersystem und/oder dem Computernetzwerk generiert wurden bzw. wurde, durch einen Smart Contract analysiert werden. Die Gefahr, dass die Ergebnisse der Lognachrichtenanalyse durch einen Angreifer manipuliert werden, wird erfindungsgemäß beseitigt. Die Lognachrichten werden von den Mining Nodes analysiert, und nicht mehr auf dem Feldgerät (mit dem entsprechenden relevanten Computersystem, für das diese Lognachrichten generiert wurden) an sich oder in der zentralen Analyseinstanz. Diese Erfindung verwendet das Blockchain-Konzept, um dem Angreifer die Lognachrichtenmanipulation zu erschweren, da es für den Angreifer unmöglich ist, zu wissen, welches Mining Node für die Blockchain den nächsten Block erstellen wird bzw. kann, und der Angreifer nicht die Mehrheit der Mining Nodes kontrollieren kann.

Die Analyse der Lognachrichten wird nicht mehr auf dem Feldgerät durch ein weiteres Gerät mit einem IDS durchgeführt, welches, d.h. unter Umständen kompromittiert oder gefährdet sein könnte. Die fundamentale Sicherheitsannahme bei einer Blockchain-basierten Lösung ist, dass ein Angreifer niemals in der Lage ist, bei einem Blockchain-System die Mehrheit sämtlicher Teilnehmer (z.B. Mining Nodes) zu kontrollieren und somit die Ergebnisse von Lognachrichtenanalysen zu verfälschen.

Bei einer Proof-of-Work-Nachweis-basierten Blockchain muss der Angreifer mehr als 50% sämtlicher Rechenkapazität kontrollieren, welches auch als "51%-Angriff" bezeichnet wird, um in der Blockchain falsche Ergebnisse speichern zu können.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt bzw. Inhalt einer bestimmten Transaktion zu lösen ist. Eine solche rechenintensive Aufgabe wird beispielsweise auch als kryptographisches Rätsel Puzzle bezeichnet.

Bei einer Proof-of-Stake-Nachweis-basierten Blockchain muss der Angreifer mehr als 50% der Systemwährung kontrollieren, um in der Blockchain falsche Ergebnisse speichern zu können. Unter "Proof-of-Stake-Nachweis" kann im Zusammenhang mit der Erfindung beispielsweise ein Verfahren verstanden werden, mit dem ein Blockchain-Netzwerk einen Konsens darüber erzielt, welcher Teilnehmer den nächsten Block erzeugen darf.

Aufgrund der technischen Natur von Blockchains ist es außerdem für einen Angreifer nicht möglich, zu wissen, von welchem Mining Node das sich ergebende Analyseergebnis einer Logdatei in der Blockchain gespeichert wird. Daher hat der Angreifer keine Chance, Ergebnisse von Lognachrichtenanalyse zu manipulieren.

Darüber hinaus wird erfindungsgemäß ein Integritätsschutz von Lognachrichten gewährleistet. Ergebnisse von Lognachrichtenanalysen sind in der Blockchain abgespeichert und können ebenfalls wegen der technischen Natur der Blockchain nicht im Nachhinein von Angreifern geändert werden. Es ist für sämtliche Blockchainteilnehmer ersichtlich, welche IDS-Geräte vertrauenswürdig/integer sind und welche nicht.

Mit dem erfinderischen Verfahren in einer Blockchain wird zudem die Skalierbarkeit und Wartung des Systems zur Erkennung eines Angriffs deutlich erleichtert. Erfindungsgemäß ist nicht mehr ein Betreiber einer zentralen Instanz, sondern die ganze Blockchain-Gemeinschaft verantwortlich für die Skalierung und Wartung.

Des Weiteren werden gegenüber der zentralen Instanz bei der erfindungsgemäßen dezentralen Architektur die Kosten beträchtlich reduziert. Denn erfindungsgemäß sind weder Redundanzmechanismen, noch der Betrieb eines zentralen Servers mit einem Hochleistungssystem, noch Experten für die Wartung eines Blockchain-System erforderlich.

Außerdem ist z.B. mit der erfindungsgemäßen dezentralen Datenspeicherung das Problem bezüglich des Single Point of Failure gelöst.

In einer bevorzugten Ausführungsform ist es vorgesehen, dass das Verfahren den folgenden weiteren Schritt aufweist: Einsetzen eines Aktivierungsmittels für das Analysemittel in die Blockchain, welches Aktivierungsmittel mindestens eine Voraussetzung für die Ausführung des Analysemittels festlegt.

In einer weiteren bevorzugten Ausführungsform ist es vorgesehen, dass durch das Aktivierungsmittel ein Zeitintervall zwischen zwei nacheinander vorgenommenen Ausführungen des Analysemittels festgelegt wird, und/oder, dass durch das Aktivierungsmittel eine Dateneinheit für die Ausführung des Analysemittels festgelegt wird, und/oder, dass durch das Aktivierungsmittel ein Ereignis außerhalb der Blockchain als Trigger für die Ausführung des Analysemittels festgelegt wird.

In einer weiteren bevorzugten Ausführungsform ist es vorgesehen, dass das Ausführen des Analysemittels durch Mining Nodes der Blockchain oder durch das Analysemittel selbst vorgenommen wird.

In einer weiteren bevorzugten Ausführungsform ist es vorgesehen, dass das Verfahren die folgenden weiteren Schritte aufweist: Bereitstellen eines Belohnungsmittels mit einem vorgegebenen Belohnungswert für die Mining Nodes der Blockchain zum Ausführen des Analysemittels; und Erhöhen, falls die Anzahl der das Analysemittel auszuführenden Mining Nodes weniger als ein vorgegebener Wert ist, des vorgegebenen Belohnungswerts.

In einer weiteren bevorzugten Ausführungsform ist es vorgesehen, dass das Verfahren den folgenden weiteren Schritt aufweist: Einsetzen eines Modells des maschinellen Lernens für das Analysemittel in die Blockchain.

In einer weiteren bevorzugten Ausführungsform ist es vorgesehen, dass einer der Mining Nodes, der vor den übrigen Mining Nodes eine von dem Analyseergebnis abhängige rechenintensive Aufgabe löst, das durch diesen Mining Node ergebene Analyseergebnis in die Blockchain einfügt.

In einer weiteren bevorzugten Ausführungsform ist es vorgesehen, dass die übrigen Mining Nodes die Korrektheit des sich ergebenden Analyseergebnisses überprüfen.

In einer weiteren bevorzugten Ausführungsform ist es vorgesehen, dass der am frühesten die rechenintensive Aufgabe lösende Mining Node bestraft wird, wenn nach dem Ergebnis der Überprüfung das durch diesen Mining Node berechnete Analyseergebnis unzutreffend ist.

In einer weiteren bevorzugten Ausführungsform ist es vorgesehen, dass das Verfahren den folgenden weiteren Schritt aufweist: Überprüfen der Echtheit und/oder der Vollständigkeit der Parameter für das Analysemittel, insbesondere der Logdatei.

Gemäß einem zweiten Aspekt betrifft die Erfindung ein Blockchain-System zur Erkennung eines Angriffs auf ein Computersystem bzw. Computernetzwerk, mit einem ersten Einsatzmittel, das so eingerichtet ist, ein Analysemittel für das Computersystem bzw. Computernetzwerk als Smart Contract in eine Blockchain mit einer Vielzahl von miteinander verketteten Blöcken einzusetzen, einem Festlegungsmittel, das so eingerichtet ist, Parameter für das Analysemittel festzulegen, und einem Ausführungsmittel, das so eingerichtet ist, basierend auf den Parametern das Analysemittel auszuführen. Zumindest ein Teil der Parameter entspricht dem Verhalten des Computersystems bzw. Computernetzwerks und weist insbesondere eine Logdatei des Computersystems bzw. Computernetzwerks auf.

In einer bevorzugten Ausführungsform des Blockchain-Systems ist es vorgesehen, dass das Blockchain-System ein zweites Einsatzmittel aufweist, das dazu eingerichtet ist, ein Aktivierungsmittel für das Analysemittel in die Blockchain einzusetzen. Durch das Aktivierungsmittel ist mindestens eine Voraussetzung für die Ausführung des Analysemittels festlegbar.

In einer weiteren bevorzugten Ausführungsform des Blockchain-Systems ist es vorgesehen, dass durch das Aktivierungsmittel ein Zeitintervall zwischen zwei nacheinander vorgenommenen Ausführungen des Analysemittels festlegbar ist.

In einer weiteren bevorzugten Ausführungsform des Blockchain-Systems ist es vorgesehen, dass durch das Aktivierungsmittel eine Dateneinheit für die Ausführung des Analysemittels festlegbar ist.

In einer weiteren bevorzugten Ausführungsform des Blockchain-Systems ist es vorgesehen, dass durch das Aktivierungsmittel ein Ereignis außerhalb der Blockchain als Trigger für die Ausführung des Analysemittels festlegbar ist.

Gemäß einem dritten Aspekt betrifft die Erfindung ein Computerprogramm, umfassend Befehle, die bei der Ausführung des Programms durch einen Computer diesen veranlassen, das Verfahren nach dem ersten Aspekt auszuführen.

Gemäß einem vierten Aspekt betrifft die Erfindung ein computerlesbares Medium, umfassend Befehle, die bei der Ausführung durch einen Computer diesen veranlassen, das Verfahren nach dem ersten Aspekt auszuführen.

Die vorliegende Erfindung wird nachfolgend anhand der in den schematischen Figuren angegebenen Ausführungsbeispiele näher erläutert. Es zeigen:
- Fig. 1: eine schematisch dargestellte Ausführungsform des erfindungsgemäßen computerimplementierten Verfahrens zur Erkennung eines Angriffs auf ein Computer-system bzw. Computernetzwerk;
- Fig. 2: eine schematisch dargestellte Ausführungsform des erfindungsgemäßen Blockchain-Systems zur Erkennung eines Angriffs auf ein Computersystem bzw. Computernetzwerk;
- Fig. 3: eine schematisch dargestellte Ausführungsform des erfindungsgemäßen Computerprogramms; und
- Fig. 4: eine schematisch dargestellte Ausführungsform des erfindungsgemäßen computerlesbaren Mediums.

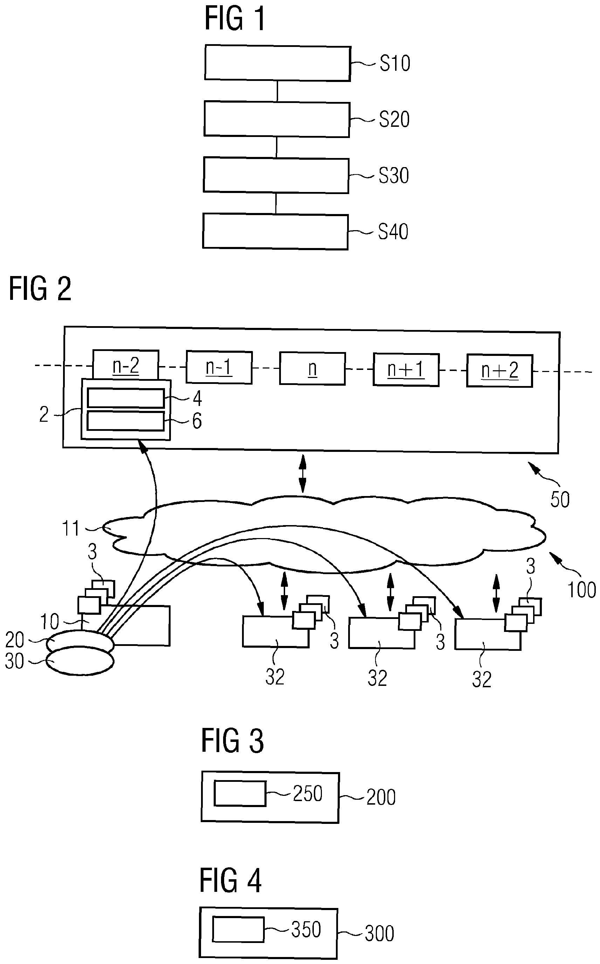

Die in Fig. 1 dargestellte Ausführungsform des erfindungsgemäßen computerimplementierten Verfahrens zur Erkennung eines Angriffs auf ein Computersystem bzw. Computernetzwerk weist vier Schritte S10, S20, S30, S40 auf.

Im Schritt S10 wird in eine Blockchain mit einer Vielzahl von miteinander verketteten Blöcken ein Analysemittel für das Computersystem bzw. Computernetzwerk als Smart Contract eingesetzt. Im Schritt S20 werden für das Analysemittel Parameter festgelegt. Zumindest ein Teil der Parameter entspricht dem Verhalten des Computersystems bzw. Computernetzwerks und weist eine Logdatei des Computersystems bzw. Computernetzwerks auf. Im Schritt S30 wird basierend auf den Parametern das Analysemittel ausgeführt. Im Schritt S40 wird in die Blockchain das Analyseergebnis eingefügt.

Die in Fig. 2 dargestellte Ausführungsform des erfindungsgemäßen Blockchain-Systems 100 zur Erkennung eines Angriffs auf ein Computersystem bzw. Computernetzwerk weist eine Blockchain 50 mit einer Vielzahl von miteinander verketteten Blöcken n-2, n-1, n, n+1, n+2 auf. Es versteht sich, dass, obwohl in Fig. 2 lediglich fünf Blöcke gezeigt sind, die Anzahl der Blöcke in der Blockchain 50 nicht auf fünf beschränkt ist.

Diese Ausführungsform des erfindungsgemäßen Blockchain-Systems 100 weist zudem eine Vielzahl von Mining Nodes 32 auf, von denen in Fig. 2 exemplarisch drei Mining Nodes 32 schematisch dargestellt sind.

Ein Orakel (engl. "Oracle") 30 wird im Blockchain-System 100 verwendet, um einen Smart Contract 2 korrekt auszuführen. Ein Orakel ist im Kontext von Blockchain eine Art von Agent, der von einem Drittanbieter bereitgestellt wird und als Dateneinspeisung für die Verwendung in Smart Contracts in Blockchains dient, da Blockchains nicht auf Daten außerhalb ihres Netzwerks zugreifen können. Ein Orakel verifiziert Geschehnisse außerhalb der Blockchain und stellt diese dann den Smart-Contracts bereit.

Der Smart Contract 2 kann nur korrekt ausgeführt werden, wenn das Orakel 30 bestätigt, dass die Lognachrichten 3 authentisch und integer sind. Das Orakel 30 kann aber auch dazu verwendet werden, die Parameter für einen Smart Contract 2, wie bspw. Lognachrichten 3 und/oder sonstige Parameter wie ein Modell des maschinellen Lernens 4, deren Authentizität und Integrität bereits verifiziert wurde, dem Smart Contract 2 hinzuzufügen.

In einer nicht dargestellten Ausführungsform ist es vorgesehen, dass mehrere Orakel existieren, die unabhängig voneinander betrieben werden, um die Integrität und/oder Authentizität von Lognachrichten und/oder sonstige Parameter wie ein Modell des maschinellen Lernens zu validieren und dem Smart Contract hinzuzufügen. In dieser Ausführungsform wird es vermieden, dass alle Mining Nodes einem einzigen Orakel vertrauen müssten, welches wieder einen "Single Point of Failure" darstellen könnte.

In einer weiteren nicht dargestellten Ausführungsform ist es vorgesehen, dass Lognachrichten an ein bzw. mehrere Orakel kontinuierlich gestreamt werden können oder als Block (z.B. 1 Megabyte Lognachrichten auf einmal) übertragen werden können. Unter "Streaming" versteht man in diesem Kontext, dass, sobald eine einzelne Lognachricht auftritt, diese an ein bzw. mehrere Orakel übertragen wird. Hierbei kann bzw. können eine Lognachricht bzw. mehrere Lognachrichten mit einer kryptographischen Methode (z.B. mit Signatur oder anderen asymmetrischen bzw. symmetrischen Kryptographien) auf Integrität und Authentizität gesichert werden.

Das Verwenden eines Orakels 30 geschieht erfindungsgemäß über MultiSig-Contracts, die Smart Contracts nur dann erlauben, auszuführen, wenn mehrere Blockchainteilnehmer wie z.B. Mining Nodes 32 und/oder Orakel/Orakels 30 der Gültigkeit dieser Smart Contracts und damit deren Ausführungen zustimmen.

In einer nicht dargestellten Ausführungsform ist es vorgesehen, dass die Aufgabe des Orakels direkt von Mining Nodes 32 übernommen wird. Die Mining Nodes 32 können die Lognachrichten empfangen und auf Integrität bzw. Authentizität validieren, dem Blockchain-System zukommen und von allen Mining Nodes analysieren lassen.

Der Smart Contract 2 kann periodisch, z.B. alle zehn Minuten, ausgeführt werden. Ist die Zeit abgelaufen, dann stellt ein Aufwecker 20 das notwendige "Gas" mit dem entsprechenden "Gas Price" den Mining Nodes 32 zur Verfügung, um das Smart Contract 2 von den Blockchainteilnehmern ausführen lassen zu können.

Unter "Aufwecker" werden besondere Blockchainteilnehmer verstanden, die Mining Nodes 32 dafür bezahlen, bestimmte Smart Contracts 2 auszuführen. "Gas" ist im Kontext von Blockchains ein Medium, das benötigt wird, um in der Blockchain 50 Rechenoperationen betreiben zu können. Je rechenintensiver ein Smart Contract 2 ist, desto mehr Gas ist erforderlich. Der "Gas Price" gibt an, wie viel man gewillt ist, für eine Rechenoperation die Mining Nodes 32 zu bezahlen. Je mehr man zahlen will, desto größer ist die Wahrscheinlichkeit, dass der Smart Contract 2 ausgeführt wird.

In einer nicht in Fig. 2 dargestellten Ausführungsform ist es möglich, zu einem gegebenen Zeitpunkt den Smart Contract 2 von selbst auszuführen. In dieser Ausführungsform ist kein Aufwecker 20 erforderlich.

Die Mining Nodes 32, die diesen Smart Contract 2 ausführen, können das dem Smart Contract 2 inhärente Modell des maschinellen Lernens 4 verwenden, um die Lognachrichten 3, die durch ein Feldgerät 10 in Form z.B. eines Roboterarms, generiert wurden, zu analysieren. Es ist auch möglich, dass die Mining Nodes 32 andere Methoden wie z.B. eine einfache bedingte Anweisung und Verzweigung (beispielsweise "if-else" in vielen Programmiersprachen mit C-ähnlicher Syntax) verwenden, um die Lognachrichten 3 zu analysieren.

Kommt der Analyseprozess zum Ende, generieren die Mining Nodes 32 einen neuen Block mit dem Resultat der Lognachrichtenanalyse und versuchen, in der Blockchain 50 das Ergebnis zu speichern. In diesem Block können neben dem Resultat der Lognachrichtenanalyse auch andere Blockchain-Transaktionen, z.B. Zahlungen und/oder Verträge, und Smart-Contract-Resultate abgespeichert werden. Hierzu ist der Proof-of-Work-Nachweis, Proof-of-Stake-Nachweis oder ein anderer Nachweis für das Generieren von Blöcken erforderlich.

Der Mining Node 32, welches als erster das kryptographische Rätsel löst und einen neuen Block n-1 generiert, publiziert das Ergebnis der Analyse im Blockchain-Netzwerk 11. Nur dieser Mining Node 32 erhält die Bezahlung bzw. Belohnung. Die übrigen Mining Nodes 32 analysieren, ob das Ergebnis korrekt ist, und übernehmen den neuen Block n-1.

Falls der Smart Contract 2 nicht ausgeführt worden ist, und die Mining Nodes 32 andere Smart Contracts bevorzugt haben, kann die Bezahlung bzw. Belohnung erhöht werden. Hierzu kann entweder der Aufwecker 20 oder der Smart Contract 2 selbst die Bezahlung erhöhen. Es ist auch möglich, durch den Aufwecker 20 dem Smart Contract Parameter, wie beispielsweise die Lognachrichten 3, hinzuzufügen.

In dem Smart Contract 2 ist das Modell des maschinellen Lernens 4 oder ein Hashwert dieses Models 4 abgespeichert. Der Smart Contract 2 ist in der Blockchain 50 gespeichert und verfügt über ein Aktivierungsintervall 6, das angibt, wann der Smart Contract 2 ausgeführt werden darf (z.B. alle 10 Minuten oder jeweils für jede Lognachricht). Das Aktivierungsintervall kann zeitbasiert sein oder auch durch Ereignisse aus der externen Welt ausgelöst werden. Ein solches Ereignis ist ein Auslöser oder Trigger für die Ausführung des Smart Contract 2 und kann derartig sein, dass Roboterarme einen Auftrag erhalten haben, nach dem ein neues Fahrzeug zu montieren ist. Die Integrität/Unversehrtheit der entsprechenden Steuerungskomponenten ist nun zu überprüfen. Erfindungsgemäß werden basierend auf Blockchain die Lognachrichten der relevanten Roboterarme analysiert, um herauszufinden, ob sie immer noch wie vorgeschrieben funktionstüchtig sind, oder, ob sie manipuliert worden sind.

Der Smart Contract 2 kann auch über eine Aktivierungsdateneinheit verfügen, die angibt, wie groß die Datenmenge der Parameter für den Smart Contract 2 werden muss, um den Smart Contract 2 ausführen zu können.

Ist das Aktivierungsintervall 6 abgelaufen, kann der Smart Contract 2 ausgeführt werden. Die Ausführung kann entweder von dem Aufwecker 20 vorgenommen werden, oder der Smart Contract 2 führt, z.B. durch einen zeitgesteuerten Trigger, sich selbst aus.

Die Aufgabe des Aufweckers 20 kann von dem Gerät 10, dem Orakel 30, dem Mining Node 32 oder einer weiteren dritten Instanz (nicht in Fig. 2 dargestellt) übernommen werden.

Der Aufwecker 20, oder der Smart Contract 2 selbst, definiert die Belohnung (d.h., das Gas und den Gas Price) für die Mining Nodes 32. Der Aufwecker 20 verteilt einen Auftrag bzw. ein Angebot an das Peer-to-Peer-Blockchain-Netzwerk 11. Also erhalten die dem Aufwecker 20 bekannten Mining Nodes 32 den Auftrag, die diesen noch an ihnen bekannte Mining Nodes weiter verteilen könnten. In diesem Angebot bietet der Aufwecker 20 einen bestimmten Gas Price für die Ausführung des Smart Contracts 2 mit den Lognachrichten 3 an. Ist der Gas Price ausreichend lukrativ, ist es möglich, dass mehr als zwei Drittel sämtlicher Mining Nodes 32 den Auftrag annehmen. Das Ausführungsresultat des Smart Contracts 2 ist das Analyseergebnis der Lognachrichten 3 mit dem Modell des maschinellen Lernens 4.

Falls der Gas Price zu niedrig war, könnte es unter Umständen sein, dass der Smart Contract 2 nicht ausgeführt worden ist bzw. die Menge der Mining Nodes gering war und somit die Wahrscheinlichkeit auch gering war, in der Blockchain erfolgreich einen Block zu generieren, und die Mining Nodes 32 haben andere lukrativere Smart Contracts ausgeführt. Erfindungsgemäß wird die Belohnung erhöht, insbesondere stückweise, bis der Smart Contract 2 erfolgreich ausgeführt wird und in der Blockchain 50 das Ergebnis gespeichert ist.

Ist nur der Hashwert (also Integritätsprüfwert) des aktuellen Modells des maschinellen Lernens 4 dargestellt, kann dieses Modell, also das dem Hashwert entsprechende Modell des maschinellen Lernens 4 auch als Inputparameter für den Smart Contract 2 angesehen und verteilt werden.

Nachdem die Mining Nodes 32 das Ergebnis der Lognachrichtenanalyse berechnet haben, versuchen diese, einen gültigen Block n-1 für die Blockchain 50 zu erstellen. Ein Block ist nur gültig, wenn dieser ein bestimmtes kryptographisches Problem löst. Der Mining Node 32, welcher als Erster dieses Problem löst, wird für die Arbeit belohnt. Die übrigen Mining Nodes 32 überprüfen das Ergebnis dieses Mining Nodes. Falls das Ergebnis korrekt berechnet worden ist, übernehmen dann alle Blockchainteilnehmer den neuen Block.

Ist nach dem Ergebnis der Überprüfung die Analyse unzutreffend, kann erfindungsgemäß der entsprechende Mining Node bestraft werden, indem z.B. eine Strafzahlung getätigt werden muss. Alternativ kann dieser Mining Node gänzlich vom Blockchainnetzwerk 11 verbannt werden.

Bei einer Proof-of-Stake-Nachweis-basierten Blockchain müssen im System 100 Kommunikationsteilnehmer wie Mining Nodes 32 eine Art von Kaution hinterlegen, um am Protokoll und somit am Konsensverfahren teilnehmen zu können. Liefert ein Mining Node 32 ein unzutreffendes Ergebnis, wird ihm ein Teil der Kaution abgenommen. Dies führt dazu, dass Angriffe wirtschaftlich unattraktiv werden. Somit entsteht für die Mining Nodes 32 eine Motivation, sich im System 100 "ehrlich" zu verhalten und zutreffende Ergebnisse zu liefern.

Bei einer Proof-of-Work-Nachweis-basierten Blockchain muss der Angreifer im System 100 mehr als 50% der gesamten Rechenleistung kontrollieren, um in die Blockchain 50 einen erfolgreichen Angriff (also falsche IDS-Analyseergebnisse) speichern zu können.

Die in Fig. 3 dargestellte Ausführungsform des erfindungsgemäßen Computerprogramms 200 umfasst Befehle 250, die bei der Ausführung des Programms 200 durch einen Computer diesen veranlassen, das Verfahren nach Fig. 1 auszuführen.

Die in Fig. 4 dargestellte Ausführungsform des erfindungsgemäßen computerlesbaren Mediums 300 umfasst Befehle 350, die bei der Ausführung durch einen Computer diesen veranlassen, das Verfahren nach Fig. 1 auszuführen.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Beispielsweise muss die Initialisierung der Blockchain nicht unbedingt vom Orakel ausgeführt werden. Es kann auch ein weiterer Blockchainteilnehmer (z.B. eine Firma oder eine Behörde) zur Lognachrichtenanalyse für seine eigenen Steuermodule in die Blockchain einen Smart Contract laden.

## Patentansprüche

1. Computerimplementiertes Verfahren zur Erkennung eines Angriffs auf ein Computersystem oder Computernetzwerk, mit den Schritten:
Einsetzen (S10) eines Analysemittels (2) für das Computersystem oder Computernetzwerk als Smart Contract (2) in eine Blockchain (50) mit einer Vielzahl von miteinander verketteten Blöcken (n-2, n-1, n, n+1, n+2);
Festlegen (S20) von Parametern für das Analysemittel (2), wobei zumindest ein Teil der Parameter dem Verhalten des Computersystems oder Computernetzwerks entspricht und insbesondere eine Logdatei (3) des Computersystems oder Computernetzwerks aufweist;
Ausführen (S30) des Analysemittels (2) basierend auf den Parametern; und
Einfügen (S40) des Analyseergebnisses in die Blockchain (50).

2. Verfahren nach Anspruch 1 mit dem weiteren Schritt:
Einsetzen eines Aktivierungsmittels (6) für das Analysemittel (2) in die Blockchain (50), welches Aktivierungsmittel (6) mindestens eine Voraussetzung für die Ausführung des Analysemittels (2) festlegt.

3. Verfahren nach Anspruch 2, wobei durch das Aktivierungsmittel (6) ein Zeitintervall (6) zwischen zwei nacheinander vorgenommenen Ausführungen des Analysemittels (2) festgelegt wird, und/oder, wobei durch das Aktivierungsmittel (6) eine Dateneinheit für die Ausführung des Analysemittels (2) festgelegt wird, und/oder, wobei durch das Aktivierungsmittel (6) ein Ereignis außerhalb der Blockchain (50) als Trigger für die Ausführung des Analysemittels (2) festgelegt wird.

4. Verfahren nach einem der vorhergehenden Ansprüche, wobei das Ausführen des Analysemittels (2) durch Mining Nodes (32) der Blockchain (50) oder durch das Analysemittel (2) selbst vorgenommen wird.

5. Verfahren nach Anspruch 4, mit den weiteren Schritten:
Bereitstellen eines Belohnungsmittels mit einem vorgegebenen Belohnungswert für die Mining Nodes (32) der Blockchain (50) zum Ausführen des Analysemittels (2); und
Erhöhen, falls die Anzahl der das Analysemittel (2) auszuführenden Mining Nodes (32) weniger als ein vorgegebener Wert ist, des vorgegebenen Belohnungswerts.

6. Verfahren nach einem der vorhergehenden Ansprüche, mit dem weiteren Schritt:
Einsetzen eines Modells des maschinellen Lernens (4) für das Analysemittel (2) in die Blockchain (50).

7. Verfahren nach einem der vorhergehenden Ansprüche, wobei eines der Mining Nodes (32), das vor den übrigen Mining Nodes (32) eine von dem Analyseergebnis abhängige rechenintensive Aufgabe löst, das durch dieses Mining Node (32) ergebene Analyseergebnis in die Blockchain (50) einfügt.

8. Verfahren nach Anspruch 7, wobei die übrigen Mining Nodes (32) die Korrektheit des sich ergebenden Analyseergebnisses überprüft.

9. Verfahren nach Anspruch 8, wobei das am frühesten die rechenintensive Aufgabe lösende Mining Node (32) bestraft wird, wenn nach dem Ergebnis der Überprüfung das durch dieses Mining Node (32) ergebene Analyseergebnis unzutreffend ist.

10. Verfahren nach einem der vorhergehenden Ansprüche, mit dem weiteren Schritt:
Überprüfen der Echtheit und/oder der Vollständigkeit der Parameter für das Analysemittel (2), insbesondere der Logdatei (3) .

11. Blockchain-System (100) zur Erkennung eines Angriffs auf ein Computersystem oder Computernetzwerk, mit
einem ersten Einsatzmittel (30), das so eingerichtet ist, ein Analysemittel (2) für das Computersystem oder Computernetzwerk als Smart Contract (2) in eine Blockchain (50) mit einer Vielzahl von miteinander verketteten Blöcken (n-2, n-1, n, n+1, n+2) einzusetzen,
einem Festlegungsmittel, das so eingerichtet ist, Parameter für das Analysemittel (2) festzulegen, und
einem Ausführungsmittel (32), das so eingerichtet ist, basierend auf den Parametern das Analysemittel (2) auszuführen, wobei zumindest ein Teil der Parameter dem Verhalten des Computersystems oder Computernetzwerks entspricht und insbesondere eine Logdatei (3) des Computersystems bzw. Computernetzwerks aufweist.

12. Blockchain-System (100) nach Anspruch 11 mit einem zweiten Einsatzmittel (30), das so eingerichtet ist, ein Aktivierungsmittel (6) für das Analysemittel (2) in die Blockchain (50) einzusetzen, wobei durch das Aktivierungsmittel (6) mindestens eine Voraussetzung für die Ausführung des Analysemittels (2) festlegbar ist.

13. Blockchain-System (100) nach Anspruch 12, wobei durch das Aktivierungsmittel (6) ein Zeitintervall (6) zwischen zwei nacheinander vorgenommenen Ausführungen des Analysemittels (2) festlegbar ist, und/oder, wobei durch das Aktivierungsmittel (6) eine Dateneinheit für die Ausführung des Analysemittels (2) festlegbar ist, und/oder, wobei durch das Aktivierungsmittel (6) ein Ereignis außerhalb der Blockchain (50) als Trigger für die Ausführung des Analysemittels (2) festlegbar ist.

14. Computerprogramm (200), umfassend Befehle (250), die bei der Ausführung des Programms (200) durch einen Computer diesen veranlassen, das Verfahren nach einem der Ansprüche 1 bis 10 auszuführen.

15. Computerlesbares Medium (300), umfassend Befehle (350), die bei der Ausführung durch einen Computer diesen veranlassen, das Verfahren nach einem der Ansprüche 1 bis 10 auszuführen.
